# EUROPEAN PATENT APPLICATION

(11) **EP 2 456 118 A1**
(43) Date of publication of application: **23.05.2012**
(21) Application number: 09847207.9
(22) Date of filing: 17.07.2009
(51) Int. Cl.: H04L 9/00

(54) **DIGITAL RIGHTS MANAGEMENT (DRM) METHOD AND EQUIPMENT IN SMALL AND MEDIUM ENTERPRISE (SME) AND METHOD FOR PROVIDING DRM SERVICE**

(71) Applicant: Alcatel Lucent, 75007 Paris (FR)
(72) Inventor: HU, Zhiyuan, Shanghai 201206 (CN); WEI, Wen, Shanghai 201206 (CN); JIN, Xiaorong, Shanghai 201206 (CN); LUO, Zhigang, Shanghai 201206 (CN)
(74) Representative: Hüttermann, Aloys
(86) International application number: PCT/CN2009/000805
(87) International publication number: WO 2011/006282

(57) **Abstract**

The present invention proposes a method for providing the user with the customized DRM software by the service provider, wherein a universal DRM system is installed and operated in said service provider, and a standard DRM software template is as well stored in said service provider, when the user makes a request for customizing DRM software to the service provider, a customized DRM software is generated from the standard DRM software template and a universal Rights Object of this use is generated; then the customized DRM software and the universal Rights Object are sent to this user. The customized DRM software operates in the user's system containing at least one client and server. A client utilizes the information associated with said one client to decrypt a customized Rights Object which is associated with the protected content and directed to said one client when it is about to access the protected file within the system; and accesses the protected file according to the decrypted customized Rights Object; wherein said customized Rights Object is generated according to the customized Rights Object template of the user's customized DRM software. A new service conception is therefore realized, that is, operators/service providers provide SMEs with "DRM service" to safely manage their proprietary files. Under such service, a layered DRM structure is accomplished, that is, the customized DRM software is protected by the universal DRM system and universal Rights Object operated by the service provider. In addition, the customized DRM software is produced by tailoring the standard DRM software template, it is small and light weight.

## Description

### Technical Field

The present invention relates to digital rights management (DRM), and more particularly to a method for providing customized DRM service to enterprise users by the service provider, and a method and apparatus for enterprise users to employ the customized DRM service.

### Background Art

In the past, many enterprises are engaged in ensuring their safety within the scope of organizations and institutions, and preventing intruders from accessing their valued asset, i.e. data. Recently, it is reported that 50 percent (even 80%) of safety breaches come from the interior of organizations and institutions, which is perhaps the greatest threat to safety.

In order to decrease internal treat to safety, some enterprises employ DRM (Digital Rights Management) to protect their proprietary files.

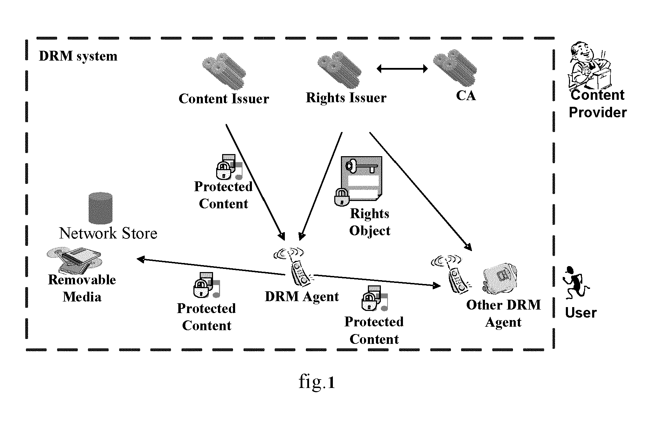

The architecture of OMA (Open Mobile Alliance) DRM 2.0 is shown in Fig. 1 (see Reference 1).

The functional entities involved in the DRM architecture comprise: DRM agent;
The DRM agent is a trusted entity in a user device. This trusted entity is responsible for enforcing permissions and constraints associated with DRM content, controlling access to DRM content, etc.

### Content Issuer

The content issuer is an entity that delivers DRM content. The content is packaged prior to delivering it so as to avoid unauthorized access. The content issuer may do the actual packaging of DRM content itself, or it may receive pre-packaged content from some other source.

### Rights Issuer

The rights issuer is an entity that assigns permissions and constraints to DRM content, and generates Rights Objects. A Rights Object difines permissions and constraints associated with a part of DRM content. Rights Objects govern how DRM content may be used, that is to say, DRM content cannot be used without an associated Rights Object, and may only be used as specified by the Rights Object.

### User

A user is the actual user of DRM content. Users access DRM content through a DRM agent.

### Certificate Authority:

A Certificate Authority (CA) is also called as digital certificate authority center, as a trusted third party, CA is specialized in solving the legitimacy problem of public key in a public key architecture. CA issues a digital certificate to each user of the public key, the function of the digital certificate is to prove a correspondence between the user name listed in the certificate and the public key listed in the certificate. The digital signature of CA causes an attacker unable to forge and falsify the digital certificate.

The basic functions of CA are: being responsible for managing the whole life cycle of secret key and the digital certificate; receiving and authenticating the application of the ultimate user digital certificate; approving certificate, issuing certificate, updating certificate, inquiring and revoking certificate; generating and issuing a Certificate Revocation List (CRL), and checking a certificate status; providing on-line certificate inquiry service, verifying an On-line Certificate Status Protocol (OCSP); providing directory service to inquiry the information associated with the user certificate; managing certificate and account of sub-certification organizations; filing digital certificate; managing the secret key of CA and its subordinate; and filing history data, etc.

In a standard OMA DRM 2.0 system, the delivery of DRM content comprises the basic steps of:
1. Content packaging: Content is packaged in a secure content container. That is to say, DRM content is converted into a DRM content format (DCF). DRM content is encrypted with a symmetric content encryption key (CEK).
2. DRM Agent authentication: All DRM Agents have a unique private/public key pair and a certificate. The certificate includes additional information such as software version, serial numbers, etc. This allows the content issuers and rights issuers to securely authenticate a DRM agent.
3. Rights Object generation: A Rights Object defines the permissions and constraints associated with the content. The Rights Object also contains the CEK, this ensures that DRM Content cannot be used without an associated Rights Object.
4.Rights Object protection: Sensitive parts of the Rights Object (e.g. the CEK) are encrypted, and the Rights Object is cryptographically bound to the target DRM Agent. This ensures that only the target DRM Agent can access the Rights Object and the DRM Content.
5. Delivery: The Rights Object and DCF can be delivered to the target DRM Agent. Since both are secure, they can be delivered using any transport mechanism (e.g. HTTP/WSP, WAP Push, MMS).

In OMA DRM system, each DRM Agent is provisioned with a unique key pair and an associated certificate signed by CA for identifying the DRM Agent and certifying the binding between the DRM Agent and the key pair. This allows rights issuers to securely authenticate the DRM Agent using PKI procedure.

However, DRM is complex and difficult to implement and configure Furthermore, CA and related certificates management are necessary. The royalties of DRM is also very high.

Besides, some enterprises adopt Rights Management Services (RMS) to protect their proprietary files.

However, RMS depends on a Microsoft system and Microsoft files. RMS is not suitable for the files in other systems (e.g. Linux, Symbian). An RMS file cannot be accessed offline. In addition, it is difficult for two different enterprises to share the protected files (e.g. business contract).

Therefore, these two mechanisms, DRM and RMS, are not suitable for SME(Small and Medium Enterprise).

### Reference document:

[1] DRM Architecture, Approved version 2.1, 14 Oct. 2008,
   http://www.openmobilealliance.org/UseAgreement.html.

### Summary of the Invention

The present invention proposes a new service conception, i.e. DRM service directed to enterprise sensitive files, which can be provided to SMEs by telecommunication operators or service providers. The main idea is to provide a SME with a customized DRM software so that the SME is able to safely manage its proprietary files within the interior. The customized DRM software is a light-weight DRM software, it is realized according to the specific demands of the SME and is running as a plug-in. The customized DRM software is provided by an operator/service provider and protected by the universal DRM system and universal Rights Object running at the operator /service provider. As a result, the operator/service provider may charge this service and gets benefit from it. In addition, an SME can flexibly protect its proprietary files at a low cost.

The first scheme of the invention proposes a method for performing DRM on a protected file within a system comprising a server and at least one client, said method comprises the steps of: at one of said at least one client, when said protected file is to be accessed, utilizing the information associated with said one client to encrypt a customized Rights Object associated with said protected file and directed to said one client; and accessing the protected files according to the decrypted customized Rights Object.

Preferably, said method further comprises a step of downloading from the server the customized Rights Object directed to said one client to said one client, said step of downloading the customized Rights Object includes the sub-steps of: said one client sending to the server a request for acquiring the customized Rights Object; the server generating a customized Rights Object directed to said one client according to a customized Rights Object template, using the information associated with said one client to encrypt said customized Rights Object, and then sending the encrypted customized Rights Object to said one client.

Preferably, said method further comprises a step of generating the customized Rights Object template, said step of generating the customized Rights Object template includes: directly generating on the server the customized Rights Object template directed to the assessing authority set of all clients.

Preferably, said method further comprises a step of generating the customized Rights Object template, said step of generating the customized Rights Object template includes: generating, at one of said at least one client, the customized Rights Object template directed to the assessing authority set of all clients, and directly uploading it onto the server in a plaintext and physically secure way.

Preferably, said method further comprises a step of generating the customized Rights Object template, said step of generating a customized Rights Object template includes: generating, at one of said at least one client, the customized Rights Object template directed to the assessing authority set of all clients, and uploading it onto the server in a remote way, the steps of generating said customized Rights Object template and uploading it remotely comprise: said one client generating the customized Rights Object template directed to the accessing authority set of all clients; said one client using its log-in key and the related information to encrypt said customized Rights Object template; said one client sending the encrypted customized Rights Object template and the related information to the server; and the server decrypting, based on the log-in key and related information of said one client, the encrypted customized Rights Object template and saving the decrypted customized Rights Object template.

Preferably, the protected file is stored in the server or any one of said at least one client.

The method of performing DRM on the protected file within the system as described in the present invention is adopted. Instead of PKI, symmetrical key cryptography binding with the information of personal users within an enterprise (for example, log-in key, user ID, etc.) is adopted, so the key management becomes very simple. Moreover, within an enterprise, a Right Object is bound with the personal information of a personal user in this enterprise, so a role-based access is supported.

The second scheme of the invention proposes a method for providing the user with the customized DRM software by the service provider, wherein a universal DRM system is installed and operated in said service provider, and a standard DRM software template is as well stored in said service provider, said method comprises the steps of: the user making a request for customizing DRM software to the service provider; according to the user's request, generating the customized DRM software from the standard DRM software template; the universal DRM system generating the universal Rights Object of this user according to the user's access authority; sending the customized DRM software to the user; and the user employing the customized DRM software according to the universal Rights Object of the customized DRM software.

Preferably, said method further comprises a step of sending to the user the universal Rights Object of the customized DRM software of the user.

Preferably, the step that the user employs the customized DRM software according to the universal Rights Object of the customized DRM software includes: operating said customized DRM software within the user's system consisting of at least one client and server; within said system, one of said at least one client utilizing the information associated with said one client to decrypt a customized Rights Object which is associated with the protected content and directed to said one client when it is about to access the protected file within the system; and accessing the protected file according to the decrypted customized Rights Object, wherein said customized Rights Object is generated according to the customized Rights Object template of the user's customized DRM software.

Preferably, said method further comprises a step of downloading from the server the customized Rights Object directed to said one client to said one client, said step of downloading the customized Rights Object includes the sub-steps of: said one client sending to the server a request for acquiring the customized Rights Object; the server generating a customized Rights Object directed to said one client according to the customized Rights Object template, using the information associated with said one client to encrypt said customized Rights Object, and then sending the encrypted customized Rights Object to said one client.

Preferably, said method further comprises a step of generating the customized Rights Object template, said step of generating the customized Rights Object template includes: directly generating on the server the customized Rights Object template directed to the assessing authority set of all clients.

Preferably, said method further comprises a step of generating the customized Rights Object template, said step of generating the customized Rights Object template includes: generating, at one of said at least one client, the customized Rights Object template directed to the assessing authority set of all clients, and directly uploading it onto the server in a plain text and physically secure way.

Preferably, said method further comprises a step of generating the customized Rights Object template, said step of generating the customized Rights Object template includes: generating, at one of said at least one client, the customized Rights Object template directed to the assessing authority set of all clients, and uploading it onto the server in a remote way, the steps of generating said customized Rights Object template and uploading it remotely comprise: said one client generating the customized Rights Object template directed to the accessing authority set of all clients; said one client using its log-in key and the related information to encrypt said customized Rights Object template; said one client sending the encrypted customized Rights Object template and the related information to the server; and the server decrypting, based on the log-in key and related information of said one client, the encrypted customized Rights Object template and saving the decrypted customized Rights Object template.

Preferably, the protected file is stored in the server or any one of said at least one client.

A new service conception is realized according to the method by which the service provider provides the user with the customized DRM software as described in the present invention, that is, an operator/service provider provides SMEs with "DRM service" in order to safely manage their proprietary files. A layered DRM infrastructure is realized under such service, that is, small and light-weight customized DRM software is protected by the universal DRM system and the universal Rights Object. In addition, the customized DRM software is formed from the standard DRM software template according to the specific demands of SMEs, and is small and light weight.

The third scheme of the invention proposes a system of performing DRM on the protected file, said system comprises a server and at least one client, wherein one of said at least one client utilizes the information associated with said one client to decrypt the customized Rights Object directed to said one client when it is about to access the protected file within the system; said one client accesses the protected file according to the decrypted customized Rights Object.

Preferably, the customized Rights Object directed to said one client is downloaded from the server to said one client, wherein said one client sends to the server a request for acquiring the customized Rights Object; after that, the server generates the customized Rights Object directed to said one client according to the customized Rights Object template, uses the information associated with the client to encrypt said customized Rights Object, and then sends the encrypted customized Rights Object to said client.

Preferably, the customized Rights Object template is stored at the server and includes the access authority set of all clients.

### Description of Drawings

In combination with the drawings and in accordance with the detailed statement of the non-restrictive embodiments of the invention below, the aforesaid and other objects, features and advantages of the invention will become more explicit, wherein:
Fig. 1 illustrates the structure of the DRM system according to OMA DRM 2.0;
Fig. 2 is a schematic diagram illustrating the procedure of customizing DRM service according to the embodiments of the invention;
Fig. 3 illustrates the structure of the customized DRM software according to the embodiments of the invention; and
Fig. 4 is a schematic diagram illustrating the procedure of acquiring the customized Rights Object within the interior of an enterprise under the customized DRM service according to the embodiments of the invention.

### Specific Embodiments

Below, the embodiments of the invention will be described specifically in combination with the drawings. In the following statements, some specific embodiments are only used for the purpose of the description and shall not be understood as any restriction to the present invention, they are nothing but the examples of the invention. It needs to point out that schematic diagrams only illustrate the difference between this invention and the existing system, wherein the conventional structure or constitution is omitted in order to avoid vague understanding of the invention.

First of all, it needs to explain that in the following statement of the invention, "universal DRM system" refers to a standard DRM system operating at the service provider; "standard DRM software template", which is stored at the service provider and protected by the universal DRM system, refers to the DRM software for generating the customized DRM software; "customized DRM software" refers to the light weight DRM software which operates at the user and is generated from the standard DRM software template. Correspondingly, "universal Rights Object" refers to the rights object directed to the user which is generated by the universal DRM system, and "customized Rights Object" refers to the rights object directed to the client which is generated by the customized DRM software.

### DRM service customization

SMEs customize "DRM service" from the service provider or operator according to the conventional procedure of a universal DRM system, i.e. SMEs acquire the customized DRM software. That is to say, a universal DRM system is operating at the service provider and a standard DRM software template is stored there as well, wherein the protected content is a standard DRM software module having a complete function. The service provider, as a content issuer, provides the enterprise users with the customized DRM software.

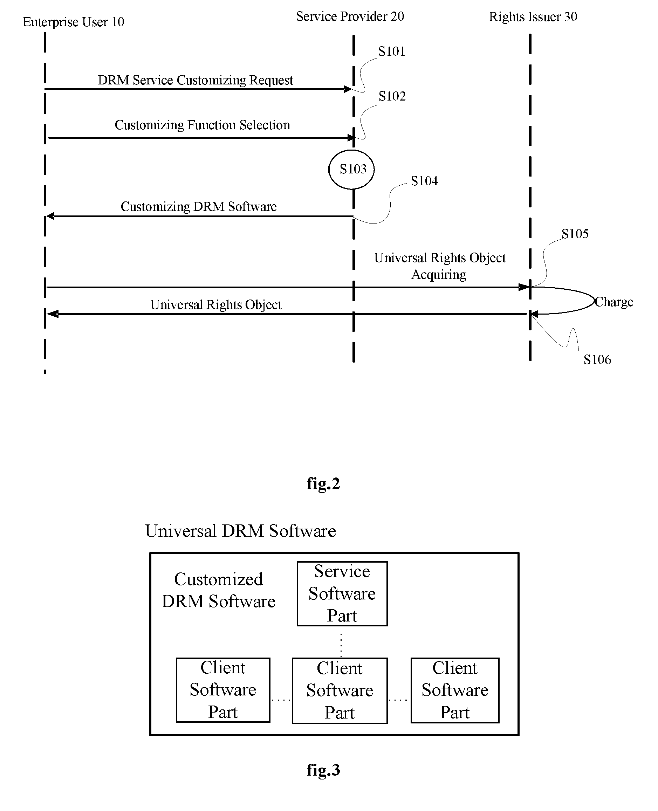

As shown in Fig. 2, first of all, at step S101, enterprise user 10 makes a request for customizing DRM service to service provider 20. The service customizing request can be off-line (physically secure way) or on-line, an on-line request may be processed in a way of universal DRM. Service provider 20 can feedback a response to enterprise user 10 based on the information of enterprise user 10 while receiving the request of enterprise user 10, so as to confirm that the DRM customizing service can be provided. Then, at step S102, in order to show the desired customized function to service provider 20, enterprise user 10 sends a message of selecting customized function to service provider 20. After that, at step S103, service provider 20 generates, according to the function customized by enterprise user 10, customized DRM software based on the standard DRM software template. A standard DRM software template has complete function, such as protection modules directed to multimedia files, Microsoft format files, etc. When enterprise user 10 is a company of file processing kind and only customizes the Microsoft format file protect function, only those modules associated with Microsoft format file protection contained in the standard DRM software template are packaged into the customized DRM software. In step S104, service provider 20 sends the generated customized DRM software to enterprise user 10. In order to utilize the customized DRM software, enterprise user 10 still needs to be connected to Rights Issuer 30 and acquires from Rights Issuer 30 the universal Rights Object of the customized DRM software (S105). Rights Issuer 30 can be the service provider 20 or a third party. When enterprise user 10 has paid the money, Rights Issuer 30 provides the required universal Rights Object to enterprise user 10. A universal Rights Object specifies the usage rules of the customized DRM software for said enterprise user, including the time limit of usage, the client number of users, the number of the customized Rights Object templates (the customized Rights Object template will be explained below) which can be generated, the format of the protected file, and etc.

As shown in Fig. 3, the customized DRM software comprises a customized DRM server software part and a customized DRM client software part. Fig. 3 also shows that the customized DRM is protected by the universal DRM system and the universal Rights Object. That is to say, the customized DRM software is the protected file within the universal DRM system which is running at the service provider.

In the interior of an enterprise user 10, there are a server and at least one client computer. The customized DRM server on which the customized DRM server software part is running is used as a DRM rights issuer having a plurality of responsibilities, for example, authenticating, group accessing control, file converting in DCF format, and etc. The customized DRM client software part is installed on the client computer and is bound with the computer serial number and/or personal user information. The client computer is used as a DRM agent.

Sometimes, one client computer may be shared by a plurality of personal users. In order to avoid that personal user A attempts to access the file of personal user B who is on the same client computer as A, when the customized DRM client software part starts running on the client computer, each personal user is identified by his/her customized client log-in key. That is to say, the customized DRM client software part is private to every single personal user. Personal user A can only operate the DRM client software part customized by himself and use his customized Rights Object to access the protected file.

### Operation of the customized DRM software within an enterprise user

Now, it is supposed that the customized DRM server software part and client software part have been installed successfully within an enterprise.

### 1. Registering and customized Rights Object uploading

Every enterprise employee, i.e. every personal user, installs a customized DRM client software part on his/her computer, and makes registration on the customized DRM server. After registration, each personal user has its own log-in key.

Then, if a personal user creates a sensitive file to be protected, he/she needs to use a CEK (Content Encryption Key, which belongs to the same concept as the CEK in the universal DRM system) to protect said sensitive file and converts it into a DCF format. This file may be packaged on the machine of the creator, or in the customized DRM server (if the customized DRM software supports).

After that, before sharing the protected file, an enterprise manager will, with regard to the protected file, set different usage rules, for example, read only, printing, copy/paste, complete control, etc., according to the roles and types of personal users, such as engineer, senior engineer, project supervisor, manager, and so on. The usage rules are formed into the customized Rights Object template.

If generated at one client, the customized Rights Object template needs to be uploaded onto the customized DRM server in one of the following ways:
1) uploading the customized Rights Object template onto the customized DRM server in a physically secure way;
2) uploading the customized Rights Object template remotely.

If the customized Rights Object template is uploaded remotely, the following steps shall be performed:
A) the client at which the customized Rights Object template is generated logging in his/her customized DRM client software part with a log-in key;
B) encrypting the customized Rights Object template with the key derived from the log-in key of said customized DRM client software part; then sending the encrypted customized Rights Object template and other information (e.g. the customized DRM client ID, user ID) to the customized DRM server; and
C) driving a decryption key from the client ID, user ID, log-in key which are based on the customized DRM client software part when the customized DRM server acquires the encrypted customized Rights Object template, then acquiring the customized Rights Object template according to the decryption key.

The customized DRM server will store the customized Rights Object template. Alternatively, the customized Rights Object template can be stored at service provider 20.

Certainly, an enterprise manager may generate a customized Rights Object template directly on the customized DRM server without the process of uploading.

For each protected file, the customized DRM server is able to generate different customized Rights Objects with regard to different personal users in accordance with the customized Rights Object template. The protected files may be stored on the server or any client. Any personal user who wants to access the protected files may also access the protected files that are already downloaded and stored on its own client when he/she is accessing the protected files on other client terminals or servers via the network.

In view that the operation of the whole customized DRM software is monitored by the universal Rights Object provided by Rights Issuer 30, the generation of the customized Rights Object is also controlled by the universal Rights Object. For example, if an enterprise user only customizes copy/paste protection rights of files, then the customized Rights Object can only control the copy/paste rights of the protected files.

### 2. Customized Rights Object downloading

After that, a certain personal user acquires the protected files from an enterprise internal port, or from other personal users.

The said personal user wants to open the protected files. If the customized DRM client software part on the client computer is closed, this personal user needs to firstly operate the client software part and uses his/her log-in key to log in.

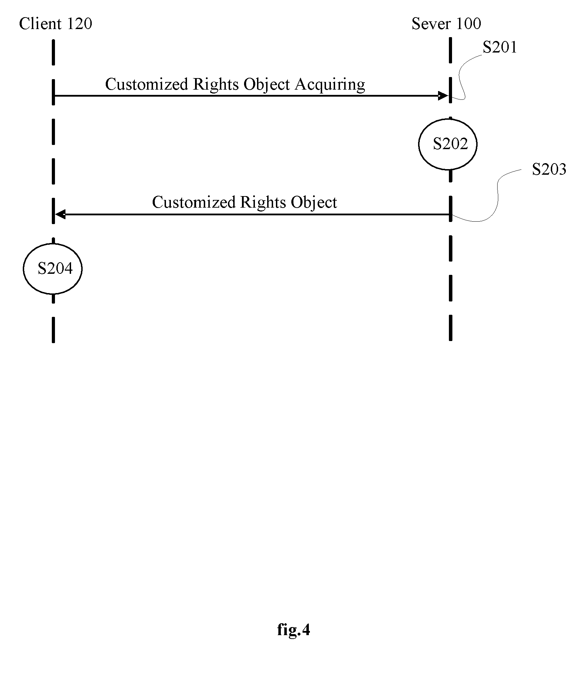

Then, the client computer searches the customized Rights Object associated with the protected file within the client computer. If there is no customized Rights Object directed to the protected file within the client computer, that is to say, this is the first time for him/her to open said protected file, then the client will trigger the procedure shown in Fig. 4 to download the customized Rights Object;
A) the client computer sending a request for acquiring the customized Rights Object to the customized DRM server (S201)
B) the customized DRM server checking the identity and role of each personal user; according to the role of the personal user, the customized DRM server generating a customized Rights Object according to the customized Rights Object template, and encrypting the customized Rights Object with the key derived from the log-in key and other information of the personal user (S202); then the protected customized Rights Object being sent to the client computer (S203);
C) the customized DRM client decrypting the customized Rights Object with the key derived from the log-in key and other information of this personal user to acquire a customized Rights Object (S204).

After that, this personal user may access the protected file according to the usage rules in the customized Rights Object.

Instead of PKI in the universal DRM, the key derived from the log-in key and other information of a personal user is used to encrypt a customized Rights Object, therefore, only this personal user can use the said customized Rights Object to access the protected content. Furthermore, key management is very simple.

Below are the main advantages of the invention:
1. A new service conception: operators/service providers provide SMEs with "DRM service" for the purpose of safely managing their proprietary files;
2. Layered DRM structure: small and light-weight customized DRM is protected by a universal DRM system and universal Rights Object;
3. Customized DRM software: small and light-weight, and is formed by adapting the standard DRM software template according to the specific demands of the SME;
   3.1) for example, small enterprises want to obtain "DRM service" from the service providers/operators to protect their Microsoft Word files, at this time, the customized DRM software is very small, for example, it only needs to support the Microsoft Word format. Besides, the expense is low.
   3.2) key management is very simple. Instead of PKI, encryption is made using a symmetrical key binding with the information (such as log-in key, user ID, etc.) of the personal user within an enterprise.
   3.3) the customized Rights Object is bound with the information of personal users within an enterprise.
4. A support for a role-based access in the customized DRM software.

The above statement only describes the preferable embodiments of the invention but does not constitute the limitation of the invention in any form. Therefore, any changes and replacement made within the spirit and range of the invention shall be covered by the scope defined in the appended claims.

## Claims

1. A method for performing Digital Rights Management (DRM) on a protected file within a system comprising a server and at least one client, said method comprising the following steps:
at one of said at least one client, when said protected file is to be accessed, utilizing the information associated with said one client to encrypt a customized Rights Object associated with said protected file and directed to said one client; and
accessing the protected file according to the decrypted customized Rights Object.

2. The method as recited in claim 1, further comprising: downloading from the server the customized Rights Object directed to said one client to said one client,
said step of downloading the customized Rights Object comprises the following sub-steps:
said one client sending to the server a request for acquiring the customized Rights Object; and
the server generating a customized Rights Object directed to said one client according to a customized Rights Object template, using the information associated with said one client to encrypt said customized Rights Object, and then sending the encrypted customized Rights Object to said one client.

3. The method as recited in claim 2, further comprising: generating the customized Rights Object template,
said step of generating the customized Rights Object template comprises:
directly generating on the server the customized Rights Object template directed to the assessing authority set of all clients.

4. The method as recited in claim 2, further comprising: generating the customized Rights Object template,
said step of generating the customized Rights Object template comprises:
generating, at one of said at least one client, the customized Rights Object template directed to the assessing authority set of all clients, and directly uploading it onto the server in a plaintext and physically secure way.

5. The method as recited in claim 2, further comprising: generating the customized Rights Object template,
said step of generating the customized Rights Object template comprises:
generating, at one of said at least one client, the customized Rights Object template directed to the assessing authority set of all clients, and uploading it onto the server in a remote way,
said steps of generating said customized Rights Object template and uploading it remotely comprise:
said one client generating the customized Rights Object template directed to the accessing authority set of all clients;
said one client using its log-in key and the related information to encrypt said customized Rights Object template;
said one client sending the encrypted customized Rights Object template and the related information to the server; and
the server decrypting, based on the log-in key and related information of said one client, the encrypted customized Rights Object template and saving the decrypted customized Rights Object template.

6. The method as recited in one of claims 1-5, wherein the protected file is stored in the server or any one of said at least one client.

7. A method of providing an user with a customized Digital Rights Management (DRM) software by a service provider, wherein a universal DRM system is installed and operated in said service provider, and a standard DRM software template is as well stored in said service provider, said method comprising the following steps:
the user making a request for customizing DRM software to the service provider;
generating the customized DRM software from the standard DRM software template according to the user's request;
the universal DRM system generating a universal Rights Object of the user according to the user's access authority;
sending the customized DRM software to the user; and
the user employing the customized DRM software according to the universal Rights Object of the customized DRM software.

8. The method as recited in claim 7, further comprising: sending to the user the universal Rights Object of the customized DRM software of the user.

9. The method as recited in claim 7 or 8, wherein the step that the user employs the customized DRM software according to the universal Rights Object of the customized DRM software comprises:
operating said customized DRM software within the user's system comprising at least one client and server;
within said system, one of said at least one client utilizing the information associated with said one client to decrypt a customized Rights Object which is associated with the protected content and directed to said one client when it is about to access the protected file within the system; and
accessing the protected file according to the decrypted customized Rights Object,
wherein said customized Rights Object is generated according to the customized Rights Object template of the user's customized DRM software.

10. The method as recited in claim 9, further comprising: downloading from the server the customized Rights Object directed to said one client to said one client,
said step of downloading said customized Rights Object comprises the following sub-steps:
said one client sending to the server a request for acquiring the customized Rights Object;
the server generating a customized Rights Object directed to said one client according to the customized Rights Object template, using the information associated with said one client to encrypt said customized Rights Object, and then sending the encrypted customized Rights Object to said one client.

11. The method as recited in claim 10, further comprising: generating the customized Rights Object template,
said step of generating the customized Rights Object template comprises:
directly generating on the server the customized Rights Object template directed to the assessing authority set of all clients.

12. The method as recited in claim 10, further comprising: generating the customized Rights Object template,
said step of generating the customized Rights Object template comprises:
generating, at one of said at least one client, the customized Rights Object template directed to the assessing authority set of all clients, and directly uploading it onto the server in a plain text and physically secure way.

13. The method as recited in claim 10, further comprising: generating the customized Rights Object template,
said step of generating the customized Rights Object template comprises:
generating, at one of said at least one client, the customized Rights Object template directed to the assessing authority set of all clients, and uploading it onto the server in a remote way,
said steps of generating said customized Rights Object template and uploading it remotely comprise:
said one client generating the customized Rights Object template directed to the accessing authority set of all clients;
said one client using its log-in key and the related information to encrypt said customized Rights Object template;
said one client sending the encrypted customized Rights Object template and the related information to the server; and
the server decrypting, based on the log-in key and related information of said one client, the encrypted customized Rights Object template and saving the decrypted customized Rights Object template.

14. The method as recited in one of claims 9-13, wherein the protected file is stored in the server or any one of said at least one client.

15. A system of performing Digital Rights Management (DRM) on a protected file, said system comprising a server and at least one client, wherein
one of said at least one client utilizes the information associated with said one client to decrypt the customized Rights Object directed to said one client when it is about to access the protected file within the system;
said one client accesses the protected file according to the decrypted customized Rights Object.

16. The system as recited in claim 15, wherein the customized Rights Object directed to said one client is downloaded from the server to said one client; wherein said one client sends to the server a request for acquiring the customized Rights Object; after that, the server generates the customized Rights Object directed to said one client according to the customized Rights Object template, uses the information associated with the client to encrypt said customized Rights Object, and then sends the encrypted customized Rights Object to said client.

17. The system as recited in claim 16, wherein the customized Rights Object template is stored at the server and comprises the access authority set of all clients.
